# EUROPÄISCHE PATENTSCHRIFT

(11) **EP 1 767 825 B1**
(45) Veröffentlichungstag und Bekanntmachung des Hinweises auf die Patenterteilung: **13.04.2011**
(21) Anmeldenummer: 05108780.7
(22) Anmeldetag: 22.09.2005
(51) Int. Cl.: F16H 61/12, F16H 61/688

(54) **Hydraulische Steuerungsvorrichtung für ein automatisiertes Doppelkupplungsgetriebe**
Hydraulic controller for an automated double clutch gearbox
Système de commande hydraulique pour une boîte de vitesses à double embrayage automatisée

(43) Veröffentlichungstag der Anmeldung: 28.03.2007
(73) Patentinhaber: Getrag Ford Transmissions GmbH, 50735 Köln (DE)
(72) Erfinder: Leibbrandt, Martin, Dr., 50181 Bedburg (DE); Moehlmann, Reinhard, 50739 Köln (DE)

(56) Entgegenhaltungen:
- DE-A1- 10 134 115

## Beschreibung

Die Erfindung betrifft eine hydraulische Steuerungsvorrichtung für ein automatisiertes Doppelkupplungsgetriebe, das eine erste Kupplung und eine zweite Kupplung aufweist.

Doppelkupplungsgetriebe sind seit längerem bekannt und werden bevorzugt in Kraftfahrzeugen eingesetzt. Ein Doppelkupplungsgetriebe weist im Allgemeinen ein erstes und ein zweites Teilgetriebe auf, denen jeweils eine Gruppe von Gängen zugeordnet ist. Durch die erste Kupplung lässt sich dabei das erste Teilgetriebe von einem Motor des Kraftfahrzeugs trennen, während die zweite Kupplung dazu dient, das zweite Teilgetriebe vom Motor zu trennen bzw. mit diesem zu verbinden.

Aufgrund des erheblichen mechanischen Aufwands, die zwei Kupplungen zu betätigen, sowie die Gänge der beiden Teilgetriebe zu schalten, sind Doppelkupplungsgetriebe zumeist automatisiert ausgebildet, d. h. sowohl die Betätigung der Kupplungen als auch das Schalten der Gänge erfolgt über zugeordnete Hilfsantriebe, die durch vorzugsweise eine hydraulische Steuerungsvorrichtung angesteuert werden.

Automatisierte Doppelkupplungsgetriebe weisen oft keine direkte mechanische Eingriffsmöglichkeit des Fahrers des Kraftfahrzeuges auf die Drehmomentübertragung des Doppelkupplungsgetriebes auf. In einigen Doppelkupplungsgetrieben lässt sich lediglich eine Parksperre durch den Fahrer des Kraftfahrzeugs mechanisch betätigen.

Die hydraulische Steuerungsvorrichtung sollte aus Sicherheitsgründen möglichst so ausgelegt sein, dass im Falle eines Fehlers jederzeit der Drehmomentfluss durch das Doppelkupplungsgetriebe sicher unterbrochen werden kann. Dies lässt sich durch

Öffnen der Kupplungen erreichen. Dazu werden die Kupplungen drucklos gestellt, soweit es sich um hydraulisch betätigte Kupplungen handelt, die im nicht druckbeaufschlagten Zustand geöffnet sind ("normally open clutch").

Ein Ausfluss der obigen Forderung ist, dass ein Drehmomentfluss auch dann noch unterbrochen werden sollte, wenn zwei Einzelfehler nacheinander auftreten, die eine direkte Auswirkung aufeinander haben können.

Neben der oben beschriebenen Forderung bezüglich der Sicherheit des Doppelkupplungsgetriebes ist auch die Forderung einer möglichst guten Verfügbarkeit des Kraftfahrzeugs nachzukommen, indem das Doppelkupplungsgetriebe eingebaut ist. Die Forderung einer guten Verfügbarkeit gilt allgemein dann als erfüllt, wenn im Falle eines Einzelfehlers zumindest ein Vorwärtsgang und ein Rückwärtsgang zur Verfügung stehen, um das Kraftfahrzeug in zwei Richtungen bewegen zu können.

Die Forderungen hinsichtlich Sicherheit und Verfügbarkeit sind bei bekannten Steuerungsvorrichtungen für Doppelkupplungsgetriebe oft nicht erfüllt. So ist beispielsweise aus der DE 101 34 115 A1 bekannt, die erste Kupplung (dies gilt sinngemäß auch für die zweite Kupplung) über einen hydraulischen Pfad anzusteuern, der aus einem ersten Schaltventil und einem zum Schaltventil in Reihe geschalteten ersten Regelventil besteht. Das erste Schaltventil, das durch ein elektrisches Steuersignal betätigbar ist, stellt die erste Kupplung in einer Ruhestellung drucklos und verbindet in einer stromangeregten Stellung die Hauptdruckleitung mit dem ersten Regelventil, das durch ein elektrisches Steuersignal gesteuert wird. Lässt sich beispielsweise das erste Schaltventil nicht mehr aus dessen Ruhestellung schalten, kann die erste Kupplung nicht mehr betätigt werden. Wird über diese Kupplung das Rückwärtsfahren realisiert, ist bei Auftreten eines einzelnen Fehlers (Ausfall des ersten Schaltventils) das Kraftfahrzeug nach obiger Maßgabe nicht mehr verfügbar.

Auf der anderen Seite kann die erste Kupplung, soweit sie zum Schließen einen Betätigungsdruck benötigt, nicht mehr geöffnet werden, wenn sich einerseits das Schaltventil nicht mehr in die Ruhestellung bringen lässt und andererseits der Druck oder das Volumen durch das Regelventil nicht mehr ausreichend abgesenkt werden kann. In diesem Fall bleibt die erste Kupplung geschlossen und der Drehmomentfluss in dem Doppelkupplungsgetriebe lässt sich nicht mehr trennen.

Gleiches gilt auch für die zweite Kupplung. Das Doppelkupplungsgetriebe weist für die zweite Kupplung ein zweites Schaltventil und ein zweites Regelventil auf, wobei sich - in analoger Weise zur ersten Kupplung - die gleichen Zusammenhänge ergeben.

Der Erfindung liegt daher die Aufgabe zugrunde, eine hydraulische Steuerungsvorrichtung für ein automatisiertes Doppelkupplungsgetriebe bereitzustellen, die einfach und kostengünstig aufgebaut ist und eine möglichst hohe Betriebssicherheit und eine möglichst hohe Verfügbarkeit aufweist.

Die der Erfindung zugrunde liegende Aufgabe wird durch die Steuerungsvorrichtung gemäß Anspruch 1 gelöst. Bevorzugte Ausführungsformen können den Unteransprüchen entnommen werden.

Die erfindungsgemäße Steuerungsvorrichtung gemäß Anspruch 1 zeichnet sich dadurch aus, dass ein Trennventil in einer Trennstellung ein zusätzliches Steuersignal auf das erste Schaltventil und das zweite Schaltventil schaltet, so dass das erste Schaltventil in einer Stellung B₁ und das zweite Schaltventil in einer Stellung B₂ die erste und zweite Kupplung von der Regelventileinheit trennt, wobei das erste Schaltventil durch wenigstens ein weiteres Steuersignal ansteuerbar ist, bei dessen Anliegen unabhängig von der Schaltstellung des Trennventils das erste Schaltventil eine Stellung A₁ einnimmt, in der die erste Kupplung mit der Regelventileinheit verbunden ist.

Durch das Trennventil werden das erste Schaltventil und das zweite Schaltventil redundant angesteuert. Das erste Schaltventil kann dabei durch das (gewöhnliche) Steuersignal, durch das das erste Schaltventil im Normalbetrieb der Steuerungsvorrichtung betätigt wird, und/oder durch das zusätzliche Steuersignal angesteuert werden, das von dem Trennventil stammt. Auch wenn das im Normalbetrieb vorgesehene Steuersignal für das erste Schaltventil ausfällt, lässt sich durch das Trennventil das erste Schaltventil sicher in die Stellung B₁ schalten, wodurch vorzugsweise die erste Kupplung drucklos gestellt wird. Somit kann durch das Trennventil sichergestellt werden, dass die erste Kupplung sich noch öffnen lässt, selbst wenn aufgrund einer Störung sowohl des Regelventileinheit als auch des (gewöhnlichen) Steuersignals die erste Kupplung ungewollt mit Druck/Volumenstrom beaufschlagt wird.

Auch das zweite Schaltventil wird redundant angesteuert. So kann es einerseits durch das (gewöhnliche) Steuersignal oder durch das zusätzliche, vom Trennventil stammende Steuersignal betätigt werden. Liegt das zusätzliche Steuersignal am zweiten Schaltventil an, wird vorzugsweise die zweite Kupplung drucklos gestellt.

Durch das weitere Steuersignal, durch das das erste Schaltventil neben dem im Normalbetrieb vorgesehenen Steuersignal und dem zusätzlichen Steuersignal angesteuert werden kann, lässt sich das erste Schaltventil in die Stellung A₁ schalten, in der die erste Kupplung mit der Regelventileinheit verbunden ist. Diese Ansteuerbarkeit durch das weitere Steuersignal stellt sicher, dass auch bei einem Fehler des Trennventils die erste Kupplung noch betätigt werden kann. Somit wird ausgeschlossen, dass durch einen Einzelfehler, nämlich des Trennventils, die erste Kupplung ausfällt. Bevorzugt sollte die erste Kupplung dem Teilgetriebe zugeordnet sein, das einen Rückwärtsgang und mindestens einen Vorwärtsgang umfasst.

Der Begriff "Steuersignal" soll auch hydraulische Steuerdrücke oder Steuervolumen umfassen, soweit es sich um hydraulisch angesteuerte Ventilen handelt. Dies ist bevorzugt bei den Schaltventilen der Fall.

In einem bevorzugten Ausführungsbeispiel ist dem zweiten Schaltventil ein Signalelement zugeordnet, das für den Normalbetrieb das Steuersignal für das zweite Schaltventil erzeugt sowie das weitere Steuersignal bereitstellt, durch das das erste Schaltventil die Stellung A₁ einnimmt. Somit kann durch das dem zweiten Schaltventil zugeordnete Signalelement das erste Schaltventil in die Stellung geschaltet werden, in der es die erste Kupplung mit der Regelventileinheit verbindet. Liegt das weitere Steuersignal an dem ersten Schaltventil an, so liegt vorzugsweise gleichzeitig dieses Signal auch an dem zweiten Schaltventil an, wobei das zweite Schaltventil nun die Stellung B₂ geschaltet bzw. in dieser Stellung gehalten wird. Die zweite Kupplung wird dadurch drucklos gestellt/gehalten.

Das Trennventil kann in einer Normalstellung das erste Regelventil mit dem ersten Schaltventil verbinden und in der Trennstellung das zweite Regelventil mit dem ersten Schaltventil verbinden. Dadurch ist es möglich, bei Ausfall des ersten Regelventils das zweite Regelventil über das Trennventil und das erste Schaltventil mit der ersten Kupplung zu verbinden, um so, soweit der ersten Kupplung ein Rückwärtsgang und mindestens ein Vorwärtsgang zugeordnet ist, für die erforderliche Verfügbarkeit zu sorgen.

In einem bevorzugten Ausführungsbeispiel kann das Trennventil durch ein Steuersignal einer Ansteuerung betätigt werden, durch die eine weitere Ventileinheit der hydraulischen Steuerungsvorrichtung angesteuert wird. Dadurch lässt sich ein Signalelement einsparen, das in der Regel elektrisch betätigt wird und mit vergleichsweise hohen Kosten verbunden ist. Somit wird ein ohnehin schon in der hydraulischen Steuerungsvorrichtung vorhandenes Steuersignal zur Aktivierung/Betätigung des Trennventils verwendet. Dabei sollte es sich um ein Steuersignal handeln, welches bei Aktivierung des Trennventils keine unerwünschten Nebenwirkungen auslöst.

Vorzugsweise ist die Ansteuerung als Zweibereichsregler ausgelegt, wobei in einem ersten Bereich die weitere Ventileinheit angesteuert wird und in entsprechenden Grenzen regelbar ist. In einem zweiten Bereich kann das Trennventil betätigt werden. Solange sich der Zweibereichsregler im ersten Bereich befindet, findet kein Schaltvorgang des Trennventils statt. Erst wenn der zweite Bereich erreicht wird, kann über die Ansteuerung das Trennventil aktiviert werden.

Vorzugsweise nimmt im zweiten Bereich die weitere Ventileinheit eine Notstellung ein. Diese Notstellung ist so auszulegen, dass die Ventileinheit ihre zugedachte Aufgabe zumindest in einem ausreichenden Maße noch erfüllen kann.

Die weitere Ventileinheit kann als Kühlölregulator ausgebildet sein. Dieser Kühlölregulator kann ein Proportionalregler sein, der im ersten Bereich des Zweibereichsreglers die Kühlölmenge reguliert und im zweiten Bereich die Kupplungen mit einer minimal notwendigen Menge an Kühlöl versorgt.

Zum ersten Schaltventil können wenigstens zwei Signalleitungen führen, die durch zwei Steuerflächen am ersten Schaltventil oder durch einen Umschalter vorzugsweise in Form eines Dreiwegekugelventils verknüpft sind. Der Umschalter ist dabei so zu gestalten, dass entweder das Steuersignal der einen Signalleitung oder das Steuersignal der anderen Signalleitung an dem ersten Schaltventil anliegt. Bei der Ausführung mit zwei Steuerflächen addieren sich die Steuersignale, so dass, wenn das Steuersignal als Steuerdruck ausgebildet ist, das erste Schaltventil mit einer höheren Schaltkraft betätigt wird.

Neben den zwei Signalleitungen führt zu dem ersten Schaltventil vorzugsweise eine dritte Signalleitung, durch die das weitere Steuersignal zum ersten Schaltventil geleitet wird. Das weitere Steuersignal jedoch hebt zumindest teilweise den Einfluss der anderen Steuersignale auf das erste Schaltventil auf, so dass das erste Schaltventil immer die Stellung A₁ einnimmt, wenn das weitere Steuersignal anliegt.

Auch zum zweiten Schaltventil führen vorzugsweise zwei Signalleitungen, die durch zwei Steuerflächen oder durch einen Umschalter vorzugsweise in Form eines Dreiwegekugelventils verknüpft sind.

In einem bevorzugten Ausführungsbeispiel stellt die Regelventileinheit wenigstens einen regelbaren Druck und/oder regelbaren Volumenstrom zur Betätigung eines Gangschaltsystems zum Ein-/Auslegen von Gängen im Doppelkupplungsgetriebe bereit. Somit übernimmt die Regelventileinheit nicht nur die Aufgabe, die erste und zweite Kupplung zu betätigen, sondern auch die Gänge im Doppelkupplungsgetriebe automatisch ein- und auszulegen.

Das erste Schaltventil kann in der Stellung A₁ das erste Regelventil mit der ersten Kupplung verbinden und von dem Gangschaltsystem trennen und in der Stellung B₁ das erste Regelventil mit dem Gangschaltsystem verbinden und von der ersten Kupplung trennen, während das zweite Schaltventil in einer Stellung A₂ das zweite Regelventil mit der zweiten Kupplung verbinden und von dem Gangschaltsystem trennen kann und in einer Stellung B₂ das zweite Regelventil mit dem Gangschaltsystem verbinden und von der zweiten Kupplung trennen kann.

Durch diese Anordnung der Regelventile und der Schaltventile lässt sich durch entsprechende Stellungen B₁, B₂ das Gangschaltsystem zum Schalten der Gänge mit beiden Regelventilen verbinden. Dadurch wird die Möglichkeit gegeben, dass sowohl das erste Regelventil als auch das zweite Regelventil einen geregelten Druck oder geregelten Volumenstrom für das Gangschaltsystem zur Verfügung stellen kann. Dieses Ausführungsbeispiel ermöglicht somit ein Schalten der Gänge, unabhängig davon, welches der beiden Regelventile ausfällt.

Zudem weist das Ausführungsbeispiel den Vorteil auf, dass durch lediglich zwei Regelventile sowohl die beiden Kupplungen betätigt als auch die Gänge geschaltet werden können. Dadurch lassen sich die Kosten für die Herstellung einer derartigen Steuerungsvorrichtung niedrig halten, da Regelventile, wie ein Druckregler oder ein Stromregler im Vergleich zu Schaltventilen teurer sind.

Zwischen dem ersten Schaltventil bzw. dem zweiten Schaltventil und dem Gangschaltsystem kann ein Umschalter vorgesehen sein, der sicherstellt, dass das Gangschaltsystem entweder nur mit dem Druck-/Volumenstrom des ersten Regelventils oder nur mit dem Druck-/Volumenstrom des zweiten Regelventils beaufschlagt wird. Dieser Umschalter dient dazu, die Verbindung zwischen dem Gangschaltsystem und dem Regelventil zu trennen, das (augenblicklich) nicht für die Steuerung des Schaltsystems vorgesehen ist oder aufgrund einer Störung die Steuerung nicht übernehmen kann. Die Steuerung des Gangschaltsystems wird daher nicht durch eine ungewollte Überlagerung von zwei Regelventilen, von denen eines möglicherweise defekt ist, beeinträchtigt.

Vorzugsweise ist der Umschalter als Wechselventil ausgebildet. Das Wechselventil, z. B. in Ausbildung eines Drei-Wege-Kugelventils, weist dabei einen ersten und zweiten Eingang sowie einen Ausgang auf, wobei der erste Eingang mit dem ersten Regelventil und der zweite Eingang mit dem zweiten Regelventil verbunden ist. Der Ausgang des Umschalters ist mit dem Gangschaltsystem verbunden. Das Wechselventil stellt eine Verbindung zwischen Ausgang und dem Eingang her, an dem ein höherer Druck anliegt, während es gleichzeitig die Verbindung zwischen Ausgang und dem Eingang mit niedrigerem Druck trennt.

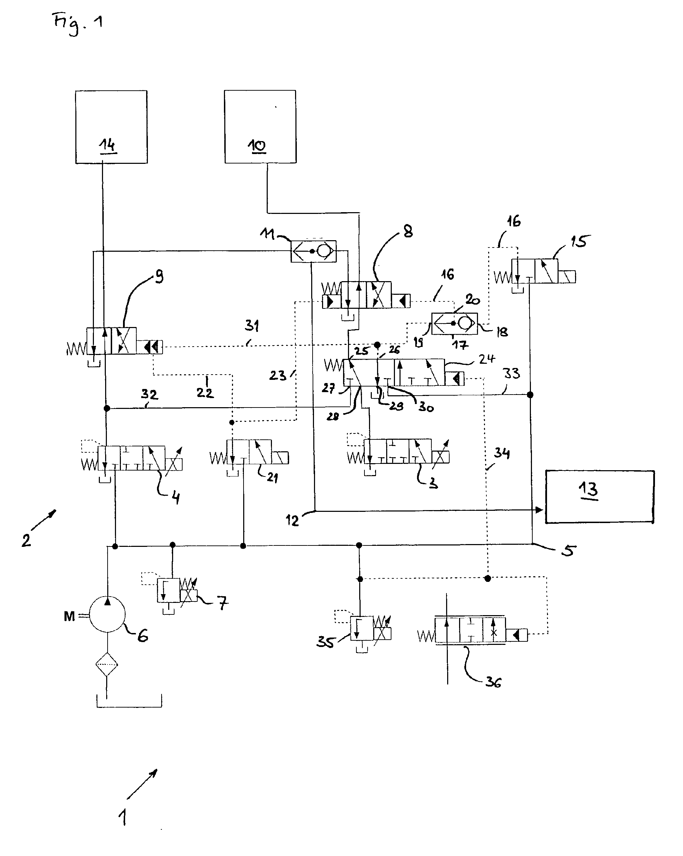

Anhand eines in Figur 1 dargestellten Ausführungsbeispiels wird die Erfindung näher erläutert. Figur 1 zeigt dabei ein Blockschaltbild eines bevorzugten Ausführungsbeispiels.

Eine in ihrer Gesamtheit mit 1 bezeichnete Steuerungsvorrichtung umfasst eine Regelventileinheit 2 mit einem ersten Druckregelventil bzw. Druckregler 3 und einem zweiten Druckregler 4. Eingangsseitig sind die beiden Druckregler 3, 4 mit einer Hauptdruck-Sammelleitung 5 verbunden. Eine Pumpe 6 in Verbindung mit einem Hauptdruckregler 7 sorgt für den entsprechenden Hauptdruck.

Dem ersten Druckregler 3 ist ein erstes Schaltventil 8 und dem zweiten Druckregler 4 ein zweites Schaltventil 9 zugeordnet. Durch das erste Schaltventil 8 lässt sich der erste Druckregler 3 entweder mit einer ersten Kupplung 10 oder mit einem als Druckumschalter ausgebildeten Umschalter 11 verbinden, der über eine Leitung 12 mit einem hier nicht weiter dargestellten Gangschaltsystem 13 verbunden ist. Mittels des zweiten Schaltventils 9 lässt sich ein geregelter Druck des zweiten Druckreglers 4 entweder auf den Druckumschalter 11 oder eine zweite Kupplung 14 schalten.

Mit der Steuerungsvorrichtung 1 lässt sich ein Doppelkupplungsgetriebe mit zwei separaten Kupplungen (vgl. erste Kupplung 10 und zweite Kupplung 14) sowie mit mehreren Stellgliedern des Gangschaltsystems steuern, durch die einzelne Gänge des Doppelkupplungsgetriebes eingelegt oder ausgelegt werden können. Das Doppelkupplungsgetriebe umfasst dabei ein erstes und zweites Teilgetriebe, die der ersten bzw. zweiten Kupplung 10, 14 zugeordnet sind. Wird ein Druck auf einen Kupplungszylinder einer Kupplung gegeben, wird die Kupplung geschlossen, die ansonsten durch eine Federkraft offen gehalten wird. Im geschlossenen Zustand überträgt die Kupplung ein Drehmoment zwischen einer Antriebseinheit und dem zugehörigen Teilgetriebe.

Zum Betätigen des ersten Schaltventils 8 ist ein Signalelement 15 vorgesehen. Das Signalelement 15 leitet über eine Signalleitung 16 ein Signal oder einen Signaldruck an das erste Schaltventil 8. Unterbrochen wird die Signalleitung 16 durch einen Umschalter 17, der wie der Umschalter 11 als Druckumschalter ausgebildet ist. Der Umschalter 17 weist dabei zwei Eingänge 18, 19 und einen Ausgang 20 auf. Schaltet nun das Signalelement 15 einen Steuerdruck über die Signalleitung 16 auf den Umschalter 17, gibt dieser, soweit am Eingang 19 kein Druck anliegt, die Verbindung zwischen Signalelement 15 und erstem Schaltventil 8 frei, so dass das Schaltventil 8 von einer hier dargestellten Stellung A_{I} (hier Ruhestellung) in eine Stellung B_{I} (hier angeregte Stellung) geschaltet wird. In dieser Stellung B₁ wird die erste Kupplung 10 drucklos gestellt und der erste Druckregler 3 mit dem Umschalter 11 verbunden.

Zum Betätigen des zweiten Schaltventils 9 ist ein Signalelement 21 vorgesehen, das über eine Signalleitung 22 ein Signal oder einen Signaldruck an das zweite Schaltventil 9 leitet. Des Weiteren ist das Signalelement 21 über eine Signalleitung 23 mit dem ersten Schaltventil 8 verbunden. Das erste Schaltventil 8 ist dabei so ausgelegt, dass es die Stellung A_{I} (wie in Figur 1 dargestellt) einnimmt, wenn über das Signalelement 21 die Hauptdruck-Sammelleitung 5 mit der Signalleitung 23 verbunden ist, unabhängig davon, ob ein Steuerdruck über den Umschalter 17 auf das erste Schaltventil 8 gelegt ist.

Die Steuerungsvorrichtung 1 umfasst des Weiteren ein Trennventil 24. Das Trennventil 24 ist als hydraulisch betätigbares 6/2-Wege-Schaltventil mit zwei Ausgängen 25, 26 und vier Eingängen 27, 28, 29, 30 ausgebildet. In einer in der Figur 1 dargestellten Normalstellung verbindet das Trennventil 24 über den Eingang 28 und den Ausgang 25 den ersten Druckregler 3 mit dem ersten Schaltventil 8. Gleichzeitig stellt es in dieser Normalstellung eine Signalleitung 31 über die Aus-/Eingänge 26, 29 drucklos. In einer Trennstellung des Trennventils 24 wird der zweite Druckregler 4 über eine Leitung 32, den Eingang 27 und den Ausgang 25 mit dem ersten Schaltventil 8 verbunden, so dass sich in dieser Trennstellung die erste Kupplung 10 mit dem zweiten Druckregler 4 betätigen lässt. Gleichzeitig wird in der Trennstellung des Trennventils 24 über die Leitung 33 der Hauptdruck auf die Signalleitung 31 geschaltet.

Das hydraulisch betätigte Trennventil 24 erhält seinen Steuerdruck über eine Signalleitung 34 von einer Kühlölansteuerung 35. Die Kühlölansteuerung 35 ist als Zweibereichsregler ausgebildet. In einem ersten Druckbereich des Zweibereichsreglers 35 lässt sich ein Kühlölregulator 36 steuern, der eine bestimmte Kühlölmenge an einem Ausgang 37 des Kühlölregulators bereitstellt. In einem zweiten Bereich des Zweibereichsreglers 35 schaltet der Kühlölregulator 36 in eine Notstellung, in der über eine Blende für eine begrenzte, aber ausreichend große Kühlölmenge gesorgt ist.

Auch das zweite Schaltventil 9 kann wie das erste Schaltventil eine erste Stellung A_{II} (wie in Figur 1 dargestellt) und eine zweite Stellung B_{II} einnehmen. Wie aus der Figur 1 deutlich wird, verbindet in der Stellung A_{II} das zweite Schaltventil 9 den zweiten Druckregler 4 mit der zweiten Kupplung 14. In der Stellung B_{II} wird die zweite Kupplung 14 drucklos gestellt, während nun der zweite Druckregler 4 über den Umschalter 11 und die Leitung 12 mit dem Gangschaltsystem 13 verbunden ist.

Im Folgenden soll die Arbeitsweise der hydraulischen Steuerungsvorrichtung 1 anhand von einigen möglichen Störfällen beschrieben werden: Liefert beispielsweise der erste Druckregler 3 aufgrund einer Störung keinen geregelten Druck mehr, kann über das Trennventil 24 die erste Kupplung mit dem zweiten Druckregler 4 verbunden werden. Dabei nimmt, wie oben bereits beschrieben, das Trennventil 24 die Trennstellung ein, in der der Hauptdruck über die Signalleitung 31 auf die Schaltventile 8, 9 als Signaldruck geleitet wird. Dies führt dazu, dass sowohl das erste Schaltventil 8 als auch das zweite Schaltventil 9 in ihre jeweilige Stellung B_{I}, B_{II} gedrückt werden. In diesen Stellungen B_{I}, B_{II} sind beide Kupplungen 10, 14 drucklos gestellt. Um nun trotzdem mit dem zweiten Druckregler 4 die erste Kupplung 10 betätigen zu können, kann das Signalelement 21 über die Signalleitung 25 den Hauptdruck auf das erste Schaltventil 8 schalten, wodurch letztgenanntes die Stellung A₁ einnimmt und den Ausgang 25 des Trennventils 24 mit der ersten Kupplung 10 verbindet. Somit ist der zweite Druckregler 4 mit der Kupplung 10 verbunden. Zweckmäßigerweise ist der ersten Kupplung 10 das Teilgetriebe des Doppelkupplungsgetriebes zugeordnet, das neben einigen Vorwärtsgängen auch einen Rückwärtsgang eines Kraftfahrzeugs umfasst. So lässt sich sowohl mit erstem Druckregler 2 als auch mit zweitem Druckregler 4 die Kupplung im Doppelkupplungsgetriebe betätigen, mit der das Kraftfahrzeug rückwärts und vorwärts bewegt werden kann.

Durch das Trennventil 24 lassen sich die Kupplungen 10, 14 sicher drucklos stellen, auch wenn durch eine Störung sowohl das Signalelement 15 und das Signalelement 21 ausfallen und sich der Druck einer der Druckregler 3, 4 nicht runterregeln lässt. Somit kann das Trennventil 24 sicher ein Drehmomentfluss durch das Doppelkupplungsgetriebe unterbrochen werden. Schaltet das Trennventil 24 störungsbedingt in die Trennstellung, sorgt Signalelement 21 in Verbindung mit dem zweiten Schaltventil 8 dafür, dass sich die erste Kupplung über den zweiten Druckregler betätigen lässt. Somit ist eine Verfügbarkeit des Kraftfahrzeugs gegeben, selbst wenn das Trennventil ausfällt , unabhängig davon, in welcher Stellung es sich befindet.

Die Schaltventile 8, 9 sind so gestaltet, dass durch Aufbringen des jeweiligen Steuerdrucks an den Steuerflächen eine so hohe Kraft erzeugt wird, dass ein Verklemmen der Ventile nahezu unmöglich ist.

Lediglich die Schaltventile 8, 9, die Regelventile 3, 4 sowie die Ansteuerung 35 und auch der Hauptstromregler 7 sind stromangesteuerte Ventile, die mit vergleichsweise hohen Kosten verbunden sind. Alle anderen Ventile werden über einen hydraulischen Steuerdruck betätigt. Durch die Erfindung lässt sich somit eine kostengünstige Steuerungsvorrichtung realisieren, die hohen Sicherheits- und Verfügbarkeitsanforderungen entspricht.

### Bezugszeichenliste

- 1: Steuerungsvorrichtung
- 2: Regelventileinheit
- 3: erster Druckregler
- 4: zweiter Druckregler
- 5: Hauptdruck-Sammelleitung
- 6: Pumpe
- 7: Hauptdruckregler
- 8: erstes Schaltventil
- 9: zweites Schaltventil
- 10: erste Kupplung
- 11: Umschalter
- 12: Leitung
- 13: Gangschaltsystem
- 14: zweite Kupplung
- 15: Signalelement
- 16: Signalleitung
- 17: Umschalter
- 18: Eingang
- 19: Eingang
- 20: Ausgang
- 21: Signalelement
- 22: Signalleitung
- 23: Signalleitung
- 24: Trennventil
- 25: Ausgang
- 26: Ausgang
- 27: Eingang
- 28: Eingang
- 29: Eingang
- 30: Eingang
- 31: Signalleitung
- 32: Leitung
- 33: Leitung
- 34: Leitung
- 35: Kühlölansteuerung
- 36: Kühlölregulator

## Patentansprüche

1. Hydraulische Steuerungsvorrichtung (1) für ein automatisiertes, eine erste Kupplung (10) und eine zweite Kupplung (14) aufweisendes Doppelkupplungsgetriebe, mit einer Regelventileinheit (2), die wenigstens einen regelbaren Druck und/oder einen regelbaren Volumenstrom für die Betätigung der ersten und zweiten Kupplung (10, 14) vorgibt sowie ein erstes Regelventil (3) und eine zweites Regelventil (4) umfasst, und mit einer Schaltventileinheit, durch die die Kupplungen (10, 14) von der Regelventileinheit (2) trennbar sind und/oder drucklos geschaltet werden können, wobei die Schaltventileinheit ein erstes Schaltventil (8) und ein zweites Schaltventil (9) umfasst, die jeweils durch ein Steuersignal betätigbar sind, **dadurch gekennzeichnet, dass** ein Trennventil (24) in einer Trennstellung ein zusätzliches Steuersignal auf das erste Schaltventil (8) und das zweite Schaltventil (9) schaltet, so dass das erste Schaltventil (8) in einer Stellung B_{I} und das zweite Schaltventil (9) in einer Stellung B_{II} die erste und zweite Kupplung (10, 14) von der Regelventileinheit (2) trennen und/oder drucklos stellen, wobei das erste Schaltventil (8) durch wenigstens ein weiteres Steuersignal ansteuerbar ist, bei dessen Anliegen unabhängig von der Schaltstellung des Trennventils (24) das erste Schaltventil (8) eine Stellung A_{I} einnimmt, in der die erste Kupplung (10) mit der Regelventileinheit (2) verbunden ist und betätigbar ist.

2. Steuerungsvorrichtung (1) nach Anspruch 1, **dadurch gekennzeichnet, dass** das erste Schaltventil (8) in der Stellung B_{I} die erste Kupplung (10) drucklos stellt und dass das zweite Schaltventil (9) in der Stellung B_{I} die zweite Kupplung (14) drucklos stellt.

3. Steuerungsvorrichtung (1) nach Anspruch 1 oder 2, **dadurch gekennzeichnet, dass** dem zweiten Schaltventil (9) ein Signalelement (21) zugeordnet ist, das das Steuersignal für das zweite Schaltventil (9) erzeugt sowie das weitere Steuersignal bereitstellt, durch das das erste Schaltventil (8) die Stellung A_{I} einnimmt.

4. Steuerungsvorrichtung (1) nach einem der Ansprüche 1 oder 3, **dadurch gekennzeichnet, dass** das Trennventil (24) in einer Normalstellung das erste Regelventil (3) mit dem ersten Schaltventil (8) verbindet und in der Trennstellung das zweite Regelventil (4) mit dem ersten Schaltventil (8) verbindet.

5. Steuerungsvorrichtung (1) nach einem der Ansprüche 1 bis 4, **dadurch gekennzeichnet, dass** das Trennventil (24) durch ein Steuersignal einer Ansteuerung (35) betätigbar ist, durch die eine weitere Ventileinheit (36) angesteuert wird.

6. Steuerungsvorrichtung (1) nach Anspruch 5, **dadurch gekennzeichnet, dass** die Ansteuerung (35) als Zweibereichsregler ausgelegt ist, wobei in einem ersten Bereich die weitere Ventileinheit (36) angesteuert wird und in einem zweiten Bereich das Trennventil (24) betätigbar ist.

7. Steuerungsvorrichtung (1) nach Anspruch 6, **dadurch gekennzeichnet, dass** im zweiten Bereich die weitere Ventileinheit (36) eine Notstellung einnimmt.

8. Steuerungsvorrichtung (1) nach einem der Ansprüche 5 bis 7, **dadurch gekennzeichnet, dass** die weitere Ventileinheit zur Regulierung von Kühlöl dient.

9. Steuerungsvorrichtung (1) nach einem der Ansprüche 1 bis 8, **dadurch gekennzeichnet, dass** zum ersten Schaltventil (8) wenigstens zwei Signalleitungen (16, 31) führen, die durch zwei Steuerflächen oder durch ein Umschalter (18) vorzugsweise in Form eines Drei-Wege-Kugelventils verknüpft sind.

10. Steuerungsvorrichtung (1) nach einem der Ansprüche 1 bis 9, **dadurch gekennzeichnet, dass** zum zweiten Schaltventil (9) wenigstens zwei Signalleitungen (22, 31) führen, die durch zwei Steuerflächen oder durch ein Umschalter vorzugsweise in Form eines Drei-Wege-Kugelventils verknüpft sind.

11. Steuerungsvorrichtung (1) nach einem der Ansprüche 1 bis 10, **dadurch gekennzeichnet, dass** die Regelventileinheit (2) wenigstens einen regelbaren Druck und/oder regelbaren Volumenstrom zur Betätigung eines Gangschaltsystems (13) zum Ein-/Auslegen von Gängen im DoppelKupplungsgetriebe bereitstellt.

12. Steuerungsvorrichtung (1) nach Anspruch 11, **dadurch gekennzeichnet, dass** das erste Schaltventil (8) in der Stellung A_{I} das erste Regelventil mit der ersten Kupplung (10) verbindet und von dem Gangschaltsystem (13) trennt und in der Stellung B_{I} das erste Regelventil (3) mit dem Gangschaltsystem (13) verbindet und von der ersten Kupplung (10) trennt und das zweite Schaltventil (9) in einer Stellung A_{II} das zweite Regelventil (4) mit der zweiten Kupplung (14) verbindet und den vom Gangschaltsystem (13) trennt und in einer Stellung B_{II} das zweite Regelventil (4) mit dem Gangschaltsystem (13) verbindet und von der zweiten Kupplung (14) trennt.

13. Steuerungsvorrichtung (1) nach Anspruch 11 oder 12, **dadurch gekennzeichnet, dass** zwischen dem ersten Schaltventil (8) beziehungsweise dem zweiten Schaltventil (9) und dem Gangschaltsystem (13) ein Umschalter (11) vorgesehen ist, der sicherstellt, dass das Gangschaltsystem (13) entweder mit dem Druck/Volumenstrom des ersten Regelventils (3) oder mit dem Druck/Volumenstrom des zweiten Regelventils (4) beaufschlagt wird.

14. Steuerungsvorrichtung (1) nach Anspruch 11, **dadurch gekennzeichnet, dass** der Umschalter (11) vorzugsweise als 3-Wege-Kugelventil ausgebildet ist.

## Claims

1. Hydraulic control device (1) for an automatic dual-clutch transmission which has a first clutch (10) and a second clutch (14), having a regulating valve unit (2) which predefines at least one pressure and/or one volume flow, which can be regulated, for actuating the first and second clutches (10, 14) and comprises a first regulating valve (3) and a second regulating valve (4), and having a relay valve unit, by means of which the clutches (10, 14) can be separated from the regulating valve unit (2) and/or can be switched to an unpressurized state, the relay valve unit comprising a first relay valve (8) and a second relay valve (9) which can each be operated by means of a control signal, **characterized in that** an isolating valve (24), in an isolating position, switches an additional control signal to the first relay valve (8) and the second relay valve (9), so that the first relay valve (8), in a position B_{I}, and the second relay valve (9), in a position B_{II}, separate the first and second clutches (10, 14) from the regulating valve unit (2) and/or place the first and second clutches (10, 14) in an unpressurized state, it being possible for the first relay valve (8) to be operated by means of at least one further control signal, the first relay valve (8) assuming a position A_{I}, in which the first clutch (10) is connected to and can be operated by the regulating valve unit (2), when said further control signal is applied, regardless of the switching position of the isolating valve (24).

2. Control device (1) according to Claim 1, **characterized in that** the first relay valve (8), in the position B_{I}, places the first clutch (10) in a unpressurized state, and **in that** the second relay valve (9), in the position B_{II}, places the second clutch (14) in an unpressurized state.

3. Control device (1) according to Claim 1 or 2, **characterized in that** the second relay valve (9) is assigned a signal element (21) which generates the control signal for the second relay valve (9) and provides the further control signal, by means of which the first relay valve (8) assumes the position A_{I}.

4. Control device (1) according to one of Claims 1 or 3, **characterized in that** the isolating valve (24), in a normal position, connects the first regulating valve (3) to the first relay valve (8) and, in the isolating position, connects the second regulating valve to the first relay valve (8).

5. Control device according to one of Claims 1 to 4, **characterized in that** the isolating valve (24) can be operated by means of a control signal of an actuator (35) which actuates a further valve unit (36).

6. Control device (1) according to Claim 5, **characterized in that** the actuator (35) is designed as a dual-region regulator, the further valve unit (36) being actuated in a first region, and it being possible for the isolating valve (24) to be operated in a second region.

7. Control device (1) according to Claim 6, **characterized in that**, in the second region, the further valve unit (36) assumes an emergency position.

8. Control device (1) according to one of Claims 5 to 7, **characterized in that** the further valve unit serves to regulate cooling oil.

9. Control device (1) according to one of Claims 1 to 8, **characterized in that** at least two signal lines (16, 31) lead to the first relay valve (8), said signal lines (16, 31) being linked by means of two control faces or by means of a changeover switch (18) which is preferably in the form of a three-way ball valve.

10. Control device (1) according to one of Claims 1 to 9, **characterized in that** at least two signal lines (22, 31) lead to the second relay valve (9), said signal lines (22, 31) being linked by means of two control faces or by means of a changeover switch which is preferably in the form of a three-way ball valve.

11. Control device (1) according to one of Claims 1 to 10, **characterized in that** the regulating valve unit (2) provides at least one pressure and/or volume flow, which can be regulated, for actuating a gearshift system (13) for engaging/disengaging gears in the dual-clutch transmission.

12. Control device (1) according to Claim 11, **characterized in that** the first relay valve (8), in the position A_{I}, connects the first regulating valve to the first clutch (10) and separates said first regulating valve from the gearshift system (13) and, in the position B_{I}, connects the first regulating valve (3) to the gearshift system (13) and separates said first regulating valve (3) from the first clutch (10), and the second relay valve (9), in a position A_{II}, connects the second regulating valve (4) to the second clutch (14) and separates said second regulating valve (4) from the gearshift system (13) and, in a position B_{II}, connects the second regulating valve (4) to the gearshift system (13) and separates said second regulating valve (4) from the second clutch (14).

13. Control device according to Claim 11 or 12, **characterized in that** a changeover switch (11) is provided between the first relay valve (8) and also the second relay valve (9) and the gearshift system (13), said changeover switch (11) ensuring that the gearshift system (13) is acted on either by the pressure or volume flow of the first regulating valve (3) or by the pressure or volume flow of the second regulating valve (4).

14. Control device (1) according to Claim 11, **characterized in that** the changeover switch (11) is preferably embodied as a 3-way ball valve.

## Revendications

1. Dispositif de commande hydraulique (1) pour une boîte de vitesses à double embrayage automatisée présentant un premier embrayage (10) et un deuxième embrayage (14), avec une unité de soupape de régulation (2), qui prédéfinit au moins une pression réglable et/ou un débit volumique réglable pour l'actionnement du premier et du deuxième embrayage (10, 14), et qui comprend aussi une première soupape de régulation (3) et une deuxième soupape de régulation (4), et avec une unité de soupape de commutation, qui permet de séparer les embrayages (10, 14) de l'unité de soupape de régulation (2) et/ou de les commuter sans pression, l'unité de soupape de commutation comprenant une première soupape de commutation (8) et une deuxième soupape de commutation (9), qui peuvent chacune être actionnées par un signal de commande, **caractérisé en ce qu'**une soupape de séparation (24), dans une position de séparation, commute un signal de commande supplémentaire sur la première soupape de commutation (8) et la deuxième soupape de commutation (9), de sorte que la première soupape de commutation (8), dans une position B_{I}, et la deuxième soupape de commutation (9), dans une position B_{II}, séparent le premier et le deuxième embrayage (10, 14) de l'unité de soupape de régulation (2) et/ou les mettent dans un état sans pression, la première soupape de commutation (8) pouvant être commandée par au moins un signal de commande supplémentaire, lors de l'application duquel, indépendamment de la position de commutation de la soupape de séparation (24), la première soupape de commutation (8) adopte une position A_{I}, dans laquelle le premier embrayage (10) est connecté à l'unité de soupape de régulation (2) et peut être actionné.

2. Dispositif de commande (1) selon la revendication 1, **caractérisé en ce que** la première soupape de commutation (8), dans la position B_{I}, met le premier embrayage (10) dans un état sans pression et **en ce que** la deuxième soupape de commutation (9), dans la position B_{II}, met le deuxième embrayage (14) dans un état sans pression.

3. Dispositif de commande (1) selon la revendication 1 ou 2, **caractérisé en ce que** l'on associe à la deuxième soupape de commutation (9) un élément de signal (21), qui produit le signal de commande pour la deuxième soupape de commutation (9) et qui fournit le signal de commande supplémentaire, par lequel la première soupape de commutation (8) adopte la position A_{I}.

4. Dispositif de commande (1) selon l'une quelconque des revendications 1 à 3, **caractérisé en ce que** la soupape de séparation (24), dans une position normale, relie la première soupape de régulation (3) à la première soupape de commutation (8), et, dans la position de séparation, relie la deuxième soupape de régulation (4) à la première soupape de commutation (8).

5. Dispositif de commande (1) selon l'une quelconque des revendications 1 à 4, **caractérisé en ce que** la soupape de séparation (24) peut être actionnée par un signal de commande d'une commande (35) qui permet de commander une unité de soupape supplémentaire (36).

6. Dispositif de commande (1) selon la revendication 5, **caractérisé en ce que** la commande (35) est conçue sous forme de régulateur à deux plages, dans lequel, dans une première plage, l'unité de soupape supplémentaire (36) est commandée, et, dans une deuxième plage, la soupape de séparation (24) peut être actionnée.

7. Dispositif de commande (1) selon la revendication 6, **caractérisé en ce que**, dans la deuxième plage, l'unité de soupape supplémentaire (36) adopte une position de secours.

8. Dispositif de commande (1) selon l'une quelconque des revendications 5 à 7, **caractérisé en ce que** l'unité de soupape supplémentaire sert à la régulation d'huile de refroidissement.

9. Dispositif de commande (1) selon l'une quelconque des revendications 1 à 8, **caractérisé en ce qu'**au moins deux conduites de signaux (16, 31) conduisent à la première soupape de commutation (8), lesquelles sont reliées par deux surfaces de commande ou par un inverseur (18), de préférence sous la forme d'une soupape sphérique à trois voies.

10. Dispositif de commande (1) selon l'une quelconque des revendications 1 à 9, **caractérisé en ce qu'**au moins deux conduites de signaux (22, 31) conduisent à la deuxième soupape de commutation (9), lesquelles sont reliées par deux surfaces de commande ou par un inverseur, de préférence sous la forme d'une soupape sphérique à trois voies.

11. Dispositif de commande (1) selon l'une quelconque des revendications 1 à 10, **caractérisé en ce que** l'unité de soupape de régulation (2) fournit au moins une pression réglable et/ou un débit volumique réglable pour l'actionnement d'un système de changement de vitesse (13) pour l'enclenchement/la sortie de vitesses dans la boîte de vitesses à double embrayage.

12. Dispositif de commande (1) selon la revendication 11, **caractérisé en ce que** la première soupape de commutation (8), dans la position A_{I}, relie la première soupape de régulation au premier embrayage (10) et la sépare du système de changement de vitesse (13), et, dans la position B_{I}, relie la première soupape de régulation (3) au système de changement de vitesse (13) et la sépare du premier embrayage (10), et la deuxième soupape de commutation (9), dans une position A_{II}, relie la deuxième soupape de régulation (4) au deuxième embrayage (14) et la sépare du système de changement de vitesse (13), et, dans une position B_{II}, relie la deuxième soupape de régulation (4) au système de changement de vitesse (13) et la sépare du deuxième embrayage (14).

13. Dispositif de commande (1) selon la revendication 11 ou 12, **caractérisé en ce qu'**un inverseur (11) est prévu entre la première soupape de commutation (8), respectivement la deuxième soupape de commutation (9), et le système de changement de vitesse (13), lequel garantit que le système de changement de vitesse (13) soit sollicité soit avec la pression/le débit volumique de la première soupape de régulation (3), soit avec la pression/le débit volumique de la deuxième soupape de régulation (4).

14. Dispositif de commande (1) selon la revendication 11, **caractérisé en ce que** l'inverseur (11) est réalisé de préférence sous forme de soupape sphérique à trois voies.
